(19) **Europäisches Patentamt / European Patent Office / Office européen des brevets**

(11) **EP 2 238 007 B1**

(12) # EUROPEAN PATENT SPECIFICATION

(45) Date of publication and mention
of the grant of the patent:
**30.11.2011  Bulletin 2011/48**

(51) Int Cl.:
***B60W 40/10*** *(2006.01)*    ***B60W 40/06*** *(2006.01)*
***B60T 8/1755*** *(2006.01)*    ***B60R 21/013*** *(2006.01)*
***B60R 21/13*** *(2006.01)*

(21) Application number: **07872076.0**

(22) Date of filing: **31.12.2007**

(86) International application number:
**PCT/IB2007/004466**

(87) International publication number:
**WO 2009/083749 (09.07.2009 Gazette 2009/28)**

(54) **METHOD AND APPARATUS FOR PREVENTING OVER-SPEED BY PREDICTING VEHICLE SPEED**

VERFAHREN UND VORRICHTUNG ZUR VERHINDERUNG VON ZU HOHER GESCHWINDIGKEIT DURCH FAHRZEUGGESCHWINDIGKEITSVORHERSAGE

PROCEDE ET APPAREIL DESTINES A EMPECHER LES EXCES DE VITESSE PAR PREDICTION DE LA VITESSE DU VEHICULE

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**13.10.2010   Bulletin 2010/41**

(73) Proprietor: **Renault Trucks
69800 Saint Priest (FR)**

(72) Inventor: **DECHAMP, François
F-71250 Cluny (FR)**

(74) Representative: **Putet, Gilles
Renault Trucks
VTEC France-Corporate Patents TER E70 2 12
99, route de Lyon
69806 Saint Priest Cedex (FR)**

(56) References cited:
**WO-A-2007/148193     US-A1- 2007 008 090
US-B1- 6 225 894**

**Description**

**TECHNICAL FIELD**

The present invention relates to the technical field of driving assistance for drivers to avoid rollover or over speeding while traveling on roads. In a preferred but not limitative application, the invention is directed to anti-rollover systems and methods for trucks.

**BACKGROUND ART**

Truck rollover is a serious problem in the transportation community as a vehicle rollover involves almost always the driver's death as well as the death or injury of the driver and passengers of the other vehicles eventually involved in the rollover.

Therefore, many methods and apparatus were developed for assisting the driver to avoid any over speeding on curved roads where the rollover risk is particularly high, such a described in US 2007/008 090, wherein a method for preventing vehicle rollover or over-speed for a vehicle travelling on a road by, at least: determining a present position, a present speed and a present longitudinal acceleration of the vehicle as it travels on the road; calculating an estimated speed of vehicle for at least one ahead point on the road ahead of the present position; comparing the estimated speed with a maximum safe speed for the vehicle at the ahead point and executing an action if the estimated speed exceed the maximal safe speed for this ahead position is disclosed.

In order to achieve this, many systems and methods involve an estimation or calculation of a lateral or transversal acceleration of the vehicle and a comparison of this calculated transversal acceleration to a maximal transversal acceleration admissible for the vehicle to avoid rollover in a particular situation.

In order to achieve this, the prior art systems conduct a dynamic computing of the maximum transversal acceleration and compare this dynamic value to the actual transversal acceleration of the truck and forecast the future transversal acceleration of the truck in order to make sure that the vehicle will not be in rollover situation for the next coming part of the road. If the prior art anti rollover systems manage to reduce the risk of rollover situation, they use methods which involve heavy calculation for estimating the actual transversal acceleration and the maximal transversal acceleration admissible for the vehicle according to the geometric of the vehicle and to road data and therefore need powerful computing resources.

The prior art systems aim at preventing roll-over situation but the monitoring of the present speed of the vehicle can also be used to prevent any risk of alteration of the balance of the vehicle resulting of over speeding but of also mishandling of the commercial load or discomfort of the passengers resulting of over speeding.

Furthermore, prior art systems monitor the present speed of the vehicle and compare it to a maximal safe speed but this type of monitoring does not allow to anticipate the occurring of over-speed as soon as possible in order to give the driver the opportunity to take corrective measures without being in an emergency situation.

Therefore, it appears the need of an anti-rollover or over-speeding system which manages to detect as soon as possible the driver of a risk of over-speed in order to prevent the risk of rollover with an higher rate of success than prior art.

**SUMMARY OF THE INVENTION**

In order to achieve this, the invention concerns a method for preventing vehicle rollover or over-speed for a vehicle traveling on a road by, at least:

- determining a present position Pp, a present speed Vp and a present longitudinal acceleration Alp of the vehicle as it travels on the road;
- calculating an estimated speed Ve of vehicle for at least one ahead point Pa on the road ahead of the present position assuming that the derivative of the acceleration has a null mean and follows a normal distribution law and using a standard deviation σ of the derivative of the acceleration;
- comparing the estimated speed Ve with a maximum safe speed Vs(Pa) for the vehicle at the ahead point Pa and executing an action if the estimated speed Ve(Pa) exceed the maximal safe speed Vs(Pa) for this ahead position.

By using a statistic value of the derivative of the acceleration, the method according to the invention takes into consideration the vehicle and/or the driver behavior and allows a very accurate prediction of the speed of the vehicle. According to an aspect of the method according to the invention, wherein the estimated speed is calculated according to the formula:

$$Ve(Pa) = Vp + Alp \times \Delta t - \frac{1}{2} \times C \times \sigma \times (\Delta t)^2$$

where

- $\Delta t$ is an estimated duration of the travel from the present point Pp to the point ahead Pa;
- $C \times \sigma$ is a considered value of the derivative of the acceleration, C being a coefficient of confidence chosen in the range of 0,5 to 2.

The choice of the value of C allows tuning the accuracy of the speed prediction, the higher is C the higher is the probability of the speed of the vehicle at the point ahead to be superior to the estimated speed. The choice of C will be a compromise between the risk of false alarm bothering the driver and the need to lower to a near null value the risk of occurrence of an emergency situation due to over-speeding.

The derivative of the acceleration and its normal deviation can be determined in various ways. For example the derivative of the acceleration and its normal deviation can be determined and recorded for different ranges of speed of the vehicle and/or different weight of the commercial load of the vehicle. The derivative of the acceleration and its normal deviation can also be determined without taking into consideration the speed of the vehicle. The used value of the standard deviation can be a value determined before the travel and stored in memory means but the standard deviation of the derivative of the acceleration can also be determined dynamically. Therefore, according to an aspect of the invention, the method further comprises:

- determining of the derivative of the acceleration of the vehicle;
- determining of the standard deviation $\sigma$ of the derivative of the acceleration of the vehicle for a covered portion of road;
- recording the standard deviation $\sigma$.

For example, the standard deviation $\sigma$ of the derivative of the acceleration is determined for a last covered portion of the road which length is in the range of 1 km to 100 km and preferably in the range of 5 km to 15 km.

According to another aspect of the invention, the estimated speed for the ahead point is determined using the standard deviation $\sigma$ determined for a last covered portion of road having a length equals to the linear distance between the present position and the ahead point.

The derivative of the acceleration and its normal deviation can be determined not only according to a already covered distance but also according to the duration of a previous part of the travel. Therefore, according to another aspect of the invention, the method further comprises:

- determining of the derivative of the acceleration of the vehicle;
- determining of the standard deviation $\sigma$ of the derivative of the acceleration of the vehicle for a period of travel,
- recording the standard deviation $\sigma$.

For example, the standard deviation $\sigma$ of the derivative of the acceleration can be determined for a period of travel which duration is in the range of 0,40 s to 1 h 15 min and preferably in the range of 3 min to 11 min.

The linear distance between the present point and the point ahead can be chosen according to different parameters such as the speed and/or the load of the vehicle. This linear distance can be chosen to be equals to the braking distance plus a security margin. For example, the linear distance is chosen in the range of 5 m to 100 m and preferably in the range of 10 m to 75 m.

Similarly, the duration of travel between the present point and the ahead point can be chosen according to various parameters such as the time for stopping the vehicle and/or the time of reaction of the driver. For example, duration of travel between the present point and the ahead is in the range of 0,25 s to 3 s and preferably in the range of 0,25 s to 1,5 s.

According to an aspect of the invention, the estimated speed is dynamically calculated for consecutive present positions of the vehicle as it moves on the road.

According to the invention, the actual speed and/or the acceleration of the vehicle can be determined by various means such as for example using GPS data provided by an inboard system or by inboard speedometers and/or accelerometers. The present position of the vehicle will preferably given by a GPS inboard system but can also be given by any other type of satellite system or terrestrial radio system.

According to an aspect of the invention, the course of the vehicle is dynamically determined according to the present position of the vehicle and to a destination point.

The maximal safe speeds used during the monitoring can be data already calculated stored in memory means along with the geometric data of the road and available to the process but the maximal safe speeds used during the monitoring can also be computed in real time during the monitoring process as the vehicle travels along the road. Thus according to a preferred but not exclusive implementation of the invention, the method further comprises:

- calculating a maximal safe speed for a present position as the vehicle travels on the road according to:
- road geometry data comprising at least the curvature of the road for a plurality of points ahead of the present position;
- a safety relation which the traveling vehicle V must respect at any moment or any point of the road, said safety relation being based on a comparison of the combined longitudinal and transversal acceleration of the vehicle at a point of the road with a maximal combined longitudinal and transversal acceleration admissible for the vehicle;
- and eventually executing an action if the present speed Vp at the present position Pp exceeds the maximal safe speed calculated for the present position.

According to an aspect of this preferred implementation, the safety relation comprises the following relation:

$$\left(\frac{At}{At\max}\right)^2 + \left(\frac{Al}{Al\max}\right)^2 \le 1$$

where :

- At is a transversal acceleration of the vehicle at a point of the road;
- Al is a longitudinal acceleration of the vehicle at a point of the road;
- Atmax is a maximal transversal acceleration admissible for the vehicle to travel with no risk of rollover or over-speed;
- Almax is a maximal longitudinal acceleration admissible for the vehicle to travel with no risk of rollover or over-speed;

By using the safety relation as set above, the method according to the invention uses a very accurate value of the maximal safe speed which raises the success rate of the prevention of over-speed. Furthermore when the method checks the risk of over-speed at both the present point and the point ahead this also raises the reliability of the method as it takes into consideration both the present situation and the future situation.

According to another aspect of this preferred implementation of the invention, the determination of the maximal longitudinal (Almax) and transversal (Atmax) accelerations involves trial sessions with the vehicle and/or a vehicle of the same type. The determination of Almax and Atmax can be conducted for avoiding at least roll-over risk but also to avoid any other risk situation such as vehicle sliding or to guaranty good transportation conditions for the commercial load or the passengers of the vehicle.

The maximal longitudinal (Almax) and transversal (Atmax) accelerations can be either the same for any load conditions of the vehicle or have different values according to the load of the vehicle. For example, the method according to the invention will thus use different values of maximal longitudinal and transversal accelerations depending of the load of the vehicle, each value of the maximal longitudinal acceleration and the maximal transversal acceleration corresponding for example to a different range of load for the vehicle and will also take into consideration the position of the gravity center of the vehicle according to this load.

Therefore, according to another aspect of the preferred but not exclusive implementation of the invention, the determination of the maximal longitudinal (Almax) and transversal (Atmax) accelerations takes into consideration the actual load of the vehicle and/or the actual position of the gravity center of the vehicle.

For example, the determination is conducted once at the beginning of the travel and the same values of the maximal longitudinal acceleration and the maximal transversal acceleration are used during the travel assuming the commercial load of the vehicle does not change during said travel. For the invention, a travel will be a movement from a starting point at which the vehicle is loaded or unloaded to a destination point where the vehicle is loaded or unloaded, the commercial load of the vehicle being unchanged during the travel.

According to a preferred way of conducting the preferred but not exclusive implementation of the invention, the calculation of the maximal safe speed for the present position comprises a simulation of the transversal and longitudinal accelerations for a plurality of points of an ahead portion of road delimited by the present point Pp and a distal point Pd and including the ahead point Pa,, the maximal safe speed for the present position being the maximal safe speed for which the simulated accelerations respect the safety relation at each point of the ahead portion of the road.

According to one aspect of this preferred way, the simulation involves comparing a simulated longitudinal acceleration with an available longitudinal acceleration based on a simulated transversal acceleration and based on the safety relation. According to another aspect of this preferred way, the simulation uses at least:

- an estimation relation $At_s = k(Vs)^2$ where :
- $At_s$ is a simulated transversal acceleration of the vehicle at the same point of the ahead portion;
- K is the curvature of the road at the same point of the ahead portion;
- Vs is a safe speed at a point of the ahead portion;

- a simulation relation $\left(\dfrac{At_s}{At\max}\right)^2 + \left(\dfrac{Al_s}{Al\max}\right)^2 = 1$ where:

- $At_s$ is a simulated transversal acceleration of the vehicle at a point of the ahead portion; and
- $Al_s$ is a simulated longitudinal acceleration of the vehicle at the same point of the ahead portion;
- and the safety relation.

According to a variant of the preferred way, the simulation comprises a backward sequence during which the simulated accelerations are calculated iteratively for each consecutive point of the portion ahead starting from the distal point and going backward to the present point.

According to an aspect of this variant of the preferred way, during the backward sequence it is check iteratively that the maximal safe speed at each point p of the portion ahead given by the formula $Vmax(p) = \dfrac{\sqrt{Atmax}}{k(p)}$ induce when travelling from a point p to the following p+1 a deceleration (i.e. negative acceleration) respecting the safety relation and if not a new maximal safe speed is computed using the simulation relation, the maximal safe speed for each point p of the ahead portion being recorded.

According to another variant of the preferred way, the simulation comprises a forward sequence during which the simulated accelerations are calculated iteratively for each consecutive point of the head portion starting from the present point and going forward to the distal point.

According to an aspect of this variant of the preferred implementation, during the forward sequence it is check iteratively that the maximal safe speed at each point p of the portion ahead given by the formula $Vmax(p) = \dfrac{\sqrt{Atmax}}{k(p)}$ or previously computed induce when travelling from a point p to the following p+1 an acceleration (i.e. positive acceleration) respecting the safety relation and if not a new maximal safe speed is computed using the simulation relation, the maximal safe speed for each point p of the ahead portion being recorded. According to still another variant of the preferred implementation, the simulation comprises, first, the backward sequence and, second, the forward sequence conducted using the maximal safe speed computed during the backward sequence, the maximal safe speed computed during the forward sequence for the present position being used for the comparison with the present speed of the vehicle.

According to the invention, the depth of the simulation, i.e. the length of the ahead portion on which the simulation is done, can be chosen at different value depending of, for example, the speed and/or the weight of the vehicle. According to the invention, the length of the ahead portion is superior to the braking distance of the vehicle and preferably with a safety margin. The length of the portion ahead can for example be superior to 1,2 times the braking distance of the vehicle.

Also according to the invention, the distance between two consecutive points of the iteration, can be chosen at different value depending on, for example the speed of the vehicle, and/or the computing power of the system implementing the invention but also depending on the geometrical data available.

According to a particularly preferred but non exclusive way of implementing, the method for preventing vehicle rollover or over-speed according to the invention, the maximal safe speed is dynamically calculated for consecutive present positions of the vehicle as it moves on the road.

According to the invention, the positioning and the speed and the acceleration acquisitions can be done several ways, for example, using accelerometers and/or inertial units.

According to an aspect of the invention, the present position and/or the present speed of the vehicle is determined using GPS data provided by an inboard system.

Also according to the invention, the road followed or to be followed by the vehicle can be recorded before the vehicle starts its travel. But the road followed by the vehicle can also be dynamically determined according to the present position of the vehicle and to a destination point.

According to the invention, the simulation of the calculation can be done using a ad hoc or in-house digital map but also using a commercially available digital map, the geometry data of the road at least being provided by this digital map or calculated from this digital map. In any case, the method for preventing vehicle rollover or over-speed according to the invention may comprise a step of calculating the road curvature for any point of the road ahead of the vehicle. According to the invention, the action ordered by the method if the control speed is above the safety speed can be of various kind such as for example the emission of a warning signal and/or the emission of an order for an automatic slowing of the vehicle.

The invention concerns also an apparatus for preventing a vehicle rollover or over-speed comprising:

- means for dynamically determining a present position of the vehicle traveling on a road;
- means for dynamically determining a present speed of the vehicle traveling on the road;
- means for dynamically determining a present longitudinal acceleration of the vehicle
- memory means storing at least a standard deviation σ of the derivative of the acceleration;
- computing means adapted to implement the method according to the invention and to emit a signal and/or an action order according to the result of the implementation of the method.

According to an aspect of the invention, the memory means are storing :

- geometric data of the road comprising at least the curvature of a plurality of point on the road ahead of the vehicle ;
- a maximal transversal acceleration (Atmax) admissible for the vehicle to travel with no risk of rollover or over-speed;
- a maximal longitudinal acceleration (Almax) admissible for the vehicle to travel with no risk of rollover or over-speed;

and the computing means are further adapted to implement the method according to the invention and to emit a signal and/or an action order according to the result of the implementation of the method.

According to another aspect of the invention, the apparatus further comprises:

- a digital map stored in the memory means;
- means for a user to enter a destination point;

and the computing means are further adapted for dynamically determining the course of the vehicle according to its present position and to the destination point.

The invention concerns also a digital memory comprising instructions of a computer program implementing the method according to the invention.

The various above aspects, implementations, variants, embodiments or objects of the invention may be combined in various ways with each others provided the combined aspects, implementations, variants, embodiments or objects are not incompatible or mutually exclusive.

## DESCRIPTION OF THE FIGURES

Other aspect and advantages of the present invention will be apparent from the following detailed description made in conjunction with the accompanying drawing illustrating schematically some non-limitative embodiments of the invention.

The figure 1 is a schematic view of a road followed by a vehicle, the speed of which is monitored according to the method according to the invention in order to prevent rollover or over-speed.

The figure 2 is a schematic drawing of an apparatus for implementing the method for presenting vehicle rollover or over-speed according to the invention.

## DESCRIPTION OF THE INVENTION

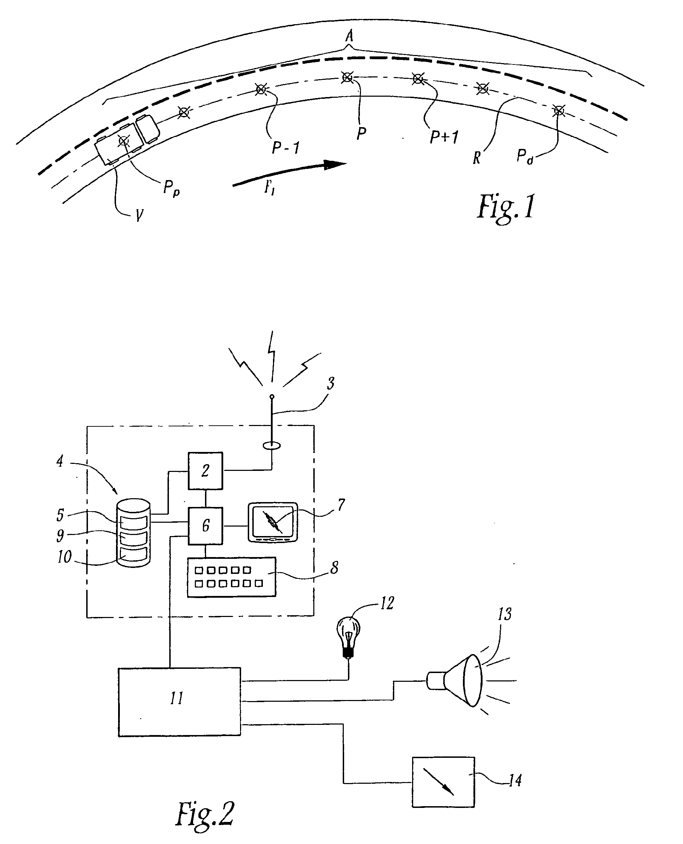

The aim of the invention is to prevent the rollover or over-speed of a vehicle V traveling on a road R as schematically shown on figure 1. As it is well-known by the man skilled in the art, when the speed of the vehicle is too high for a specific road bend or turn, the vehicle may roll over. In order to prevent the occurrence.of such situation, the invention proposes to monitor the speed of the controlled vehicle, to compute an estimated speed for a point ahead of the vehicle or at the end of a given duration of travel, and to check continuously or at least regularly that the estimated speed of the vehicle is not higher than a safety speed above which the risk of rollover or over-speed is quite high.

In order to achieve this and according to a preferred but non exclusive way to implement the invention, the vehicle is equipped with an apparatus for preventing vehicle rollover or over-speed as schematically depicted on figure 2 and designated as a whole by reference 1. According to the shown example, the apparatus 1 comprises means for dynamically determining the present position of the vehicle V traveling on the road R. The positioning means 2 may be of different types and are for example based on the Global Positioning System (GPS). Therefore, the positioning means 2 comprise an antenna 3 for receiving the signals from the GPS satellites. Using the satellite signals, the positioning means 2 compute or determine the present position Pp of the vehicle. As the positioning means compute continuously or at least repeatedly every second or several cents of second, these information can be used by the positioning means 2 or different computing means for determining the present speed Vp of the vehicle V. As the implementation of GPS system is very well-known by the skilled of the art, there is no need for further explanation of how the present position and/or present speed is determined and/or provided within the apparatus according to the invention.

According to the invention, the apparatus 1 further comprises memory means 4 on which is recorded geometric data of the road R comprising at least the curvature of the road or information for computing such curvature.

In a preferred embodiment the geometric data 5 of the road consist in a digital map such as a digital map commercially available for being used with GPS positioning and traveling systems. The apparatus 1 further comprises computing means 6 connected to the memory means 4. The computing means 6 are also connected to display means 7 and to input means such as a keyboard 8. The display means 7 and the input means 8 may of course be embedded and form a touch screen. The input means 8 can be used for entering a destination point for the vehicle, the computing means 6 being able to compute dynamically the course for the vehicle to reach its destination point starting from its present position $P_p$. This traveling course is afterwards recorded or stored in the memory means 4 as a digital file 9. On the shown example, the computing means 6 are also adapted to implement the method of preventing a vehicle rollover or over-speed according to the invention. Anyways it should be understood that the various calculation conducted for implementing the invention can be done by the same computing means or different specialized computing means communicating with each others. In order to implement the method according to the invention, the memory means 4 can store an executable code 10 of a computer program implementing the method according to the invention.

By executing the computer program 10, the computing means 6 calculate continuously or at least regularly an estimated speed for a point Pa ahead of the present position. For doing so and according to the shown embodiment, the computation means will continuously determine the longitudinal acceleration Alp of the vehicle as it travels and calculate the normal deviation σ of the jerk (i.e. the derivative of the acceleration) for the last hour of travel. This done, the computation means 6 will determine the estimated speed for the point ahead using the present speed Vp, the present longitudinal acceleration Alp of the vehicle and the following formula :

$$Ve(Pa) = Vp + Alp \times \Delta t - \frac{1}{2} \times C \times \sigma \times (\Delta t)^2$$

where:

- $\Delta t$ is an estimated duration of the travel from the present point Pp to the point ahead Pa;
- $C \times \sigma$ is a considered derivative of the acceleration, C being a coefficient of confidence chosen in the range of 0,5 to 2

For example, if C is chosen equal to 1,3 the probability that the actual speed of the vehicle within $\Delta t$ is superior to Ve(Pa) would be of 90%.

The choice of Pa can done in various ways. For example, Pa can be chosen as the point which is ahead of the vehicle of a given linear distance Ld(Pp,Pa) according for example to the speed of the vehicle, the braking distance of the vehicle or the visibility condition. In this case an estimated duration of the travel from the present point Pp to the point ahead Pa may be calculated, for example, according to the formula $\Delta t$ = Ld(Pp,Pa)/Vp. Naturally, any other formula or iterative computation may be conducted for estimating $\Delta t$.

Pa can also be chosen as the point ahead which be reach in a given duration. For example Pa may be chosen as the point reached after the average reaction delay of a driver generally considered as being approximately 1 s. In this case $\Delta t$ can for example be chosen at 1,5s

Once the estimated speed Ve(Pa) determined the computing means will compare it to the maximal safe speed for the point ahead Pa which will be reached in $\Delta t$. The maximal safe speed can be data calculated previously to the travel and recorded in the memory means 4. but according to a preferred implementation of the invention this maximal safe speed is determined during the travels by the computing means 6 as the vehicle travels on the road R corresponding to the digital road 9.

For doing this, the computing means are able to compute for each point of the road the curvature of the road if it is not available from the digital map 5. Such curvature of the road is necessary for monitoring the rollover or over-speed risk. As it is well-known, on a straight road having a curvature equal to zero there is no risk of rollover or over-speed whatever the speed of the vehicle is, whereas the rollover or over-speed risk raises with the curvature value and the speed for road bent or turn.

In order to conduct the rollover or over-speed risk monitoring, the method according to the invention suggests the use of a safety relation which a safety relation which the traveling vehicle must respect at any moment or any point of the road :

$$\left(\frac{At}{At\,max}\right)^2 + \left(\frac{Al}{Al\,max}\right)^2 \leq 1$$

where :

- At is a transversal acceleration of the vehicle at a point of the road;
- Al is a longitudinal acceleration of the vehicle at a point of the road;
- Atmax is a maximal transversal acceleration admissible for the vehicle to travel with no risk of rollover or over-speed;
- Almax is a maximal longitudinal acceleration admissible for the vehicle to travel with no risk of rollover or over-speed. Almax may reflect maximum deceleration capacity of the vehicle, due to the power of the vehicle's braking system and/or the maximum acceleration capacity of the vehicle and/or the maximum longitudinal adherence at the road/ tire interface.

The main advantage of such relation is to use, for the computation and for a same travel, Atmax and Almax with constant values.

The merit of the inventor was to show that the use of such constant values gives enough precision for guarantying the safety of the vehicle. These Atmax and Almax values will preferably be determined through trial sessions with the vehicle or a vehicle of a same type. These trial sessions will be done with a fully loaded vehicle so that the Atmax and Almax might be used for every situations as maximum values for the transversal and longitudinal accelerations. Atmax and Almax can also be determined for different level of commercial load of the vehicle or a vehicle of the same type and therefore, recorded as different values corresponding to different ranges of commercial load of the vehicle.

If so, the computing means will be adapted to determine, at the beginning of a travel, which Atmax and Almax values to use according to the actual load of the vehicle, this actual load being input by the driver or provided by a vehicle electronical control unit. Once the Atmax and Almax values are determined, these will be used during all the travel assuming the commercial load does not change during the travel or, at least, is not increased. Once the vehicle V starts traveling the positioning mean 2 compute continuously or repetitively the present position $P_p$ and the present speed of the vehicle. Meanwhile, the computing means 6 will proceed to the computing of a safe maximal speed for the present position of the vehicle.

In a preferred embodiment or implementation of the method according to the invention, this calculation will be made so that the calculated maximal safe speed avoid any risk of rollover or over-speed at the ahead point but also at the present position of the vehicle and also for any point situated in a portion of road ahead of the vehicle V including the point ahead Pa. Such an ahead portion A of the road R will start at the present position or point $P_p$ of the vehicle V and end at a distal point $P_d$. The linear distance between the present position $P_p$ and the distal point $P_d$, corresponding to the ahead portion length, may be chosen to different values depending on the vehicle type and/or the vehicle load but also of geometric characteristics of the road. The ahead portion length is for example, chosen as being superior to 1,2 times the braking distance of the vehicle according to its present speed. This ahead portion A will be used as a sliding window during the repetitive or continuous determination of the maximal safety speed for consecutive present positions of the vehicle. The ahead portion length may have the same value for all the travel. This length might also be adjusted during the travel according to the type of road and more particularly, the curvature variation of said road R. Once the ahead portion A is determined, the computing means 6 will conduct a simulation of the transversal and longitudinal accelerations for a plurality of points being parts of the ahead portion A. The plurality of points used for the calculation will be distributed along the ahead road or course, each point being separated from the following by a chosen constant distance or by a distance which may vary depending on the geometric data provided by the digital and by the curvature of the road. The density of point is generally low for straight road and higher for bent road.

According to the invention, the maximal safety for the present position Pp will be the maximal speed for which the simulated accelerations respect the safety relation at each calculation point of the ahead portion A.

For conducting this simulation the computing means 6 use at least the following formula and relation:

- an estimation relation $At_s = k(Vs)^2$ where :
- $At_s$ is a simulated transversal acceleration of the vehicle at the same point of the ahead portion;
- K is the curvature of the road at the same point of the ahead portion;
- Vs is a maximal safe speed at a point of the ahead portion;

- a simulation relation $\left(\frac{At_s}{At\,max}\right)^2 + \left(\frac{Al_s}{Al\,max}\right)^2 = 1$ where:

- At$_s$ is a simulated transversal acceleration of the vehicle at a point of the ahead portion; and
- Al$_s$ is a simulated longitudinal acceleration of the vehicle at the same a point of the ahead portion;
- and the safety relation.

According to a preferred embodiment of the invention, the simulation conducted by the computing means comprises first a backward sequence during which the simulated accelerations are calculated iteratively for each consecutive point of the ahead portion starting from the distal point and going backward to the present point. After the backward sequence, the simulation may comprise a forward sequence during which the simulated accelerations are calculated iteratively from each consecutive points of the ahead portion, starting from the present point and going forward to the distal point. During the backward sequence it will be the maximal deceleration capability of the vehicle which will be the limitative parameter whereas during the forward sequence it will be the maximal acceleration capability. As for a loaded truck the driving power available is generally not enough for reaching the maximal longitudinal acceleration whereas the braking or deceleration capability might be critical, it is chosen to begin the simulation with the backward sequence during which it will be check that the vehicle as always enough braking resources to stay under a maximal safe speed at any point of the ahead portion. In such a case, the forward sequence is optional. Nevertheless, in some cases it can be chosen to start with the forward sequence.

For any point p of the road the maximal safe speed ever admissible Vmax, without taking into consideration the actual acceleration and deceleration capabilities of the vehicle neither the travel history, is given by the formula

$$Vmax(p) = \frac{\sqrt{Atmax}}{k(p)}$$ where k(p) is the curvature of the road at the point p. This formula can be amended in order to take into consideration the gravity according to the banking of the road at the point p.

During the backward sequence the computing means 6 will calculate iteratively the maximal safe speed Vs (p) at each point p of the portion ahead according to the following rules and formulae:

- For the distal point Pd, the maximal safe speed Vs(Pd) is taken as equal to Vmax(Pd);
- Then, for each point p it is processed as following:

   A. At first Vs(p) is taken as equal to Vmax(p):

      If Vs(p) $\leq$ Vs(p+1) then the process skips to the next point p-1 of process as there is no need of deceleration or braking;

   B. If Vs(p) $\geq$ Vs(p+1) then there is a need of deceleration and it must be checked that the needed deceleration can be achieved while still respecting the safety relation. To do so the following computation can for example be conducted:

   - an estimation of the travel duration T for going from point p to point p+1 is calculated :

      $$T = \frac{2 \times ld(p, p+1)}{Vs(p) + Vs(p+1)}$$ where Id(p,p+1) is the linear distance between the point p and the point p+1;

   - The simulated transversal acceleration At$_s$(p) at the point p is taken as At$_s$(p) = k(p)[Vs(p)]$^2$. This formula can be amended in order to take into consideration the gravity according to the banking of the road a component of the corresponding to the banking of the road.

   - The simulated longitudinal acceleration Al$_s$(p) at the point p is taken as $$Als(p) = \left| \frac{Vs(p+1) - Vs(p)}{T} \right|.$$

      This formula can be amended in order to take into consideration the gravity according to the gradient of the road at the point p.

   - An available longitudinal acceleration Aa is computed using the simulation relation thus

      $$Aa = Almax \times \sqrt{1 - \left( \frac{Ats(p)}{Atmax} \right)^2} ;$$

   - The simulated longitudinal acceleration Al$_s$(p) is compared to the available longitudinal acceleration Aa:

o If $Al_s(p) \leq Aa$ then the vehicle will able to decelerate without any danger so there is no need to modify the value of Vs(p) then the process skips to the next point p-1 of process

o If $Al_s(p) > Aa$ then the vehicle will not be able to decelerate in safe conditions the value of Vs(p) must be reduced, and for example the value of Vs(p) is reduced by a correcting constant C being for example in the range of $\dfrac{Vs(p+1) - Vs(p)}{2}$ to $\dfrac{Vs(p+1) - Vs(p)}{100}$. The new value of the maximal safety speed Vs(p) at the point p Vs(p) = Vs(p) - C will used for conducting again the above process starting from B as long as Vs(p) does not allow the vehicle to respect the safety relation. Once the computed Vs(p) allows the vehicle to respect the safety relation the process skip to the next point p-1.

The process is conducted so on until the present point Pp is reached. The maximal safe speeds determined for each point of the portion ahead during the backward sequence are recorded. The maximal safe speed determined for the present point Pp at the end of this backward sequence can be directly used as the safety speed to which the present speed V(Pp) is compared whereas the maximal safe speed calculated for the point ahead can be used for the comparison with the estimated speed Ve(Pa). But in order raise the accuracy of the reliability of the calculated safe, it is conducted the forward sequence during which it will be checked that the speed raising according to the maximal safe speeds computed during the backward sequence is compliant with the safety relation.

During the forward sequence the computing means 6 will calculate iteratively the maximal safe speed Vs(p) at each point p of the portion ahead according to the following rules and formulae:

- For the present point Pd, the maximal safe speed Vs(Pp) is the one computed at the end of the backward sequence.;
- Then, for each point p it is processed as following:

    C. At first Vs(p) is taken as equal to Vs(p) as computed during the backward sequence:

        If $Vs(p) \leq Vs(p-1)$ then the process skips to the next point p+1 of process as there is no positive acceleration (i.e. speed raising);

    D. If $Vs(p) \geq Vs(p-1)$ then there is some positive acceleration and it must be checked that this positive acceleration is compliant with the safety relation. To do so the following computation can for example be conducted:

    - an estimation of the travel duration T for going from point p-1 to point p is calculated:

$T = \dfrac{2 \times ld(p-1, p)}{Vs(p-1) + Vs(p)}$ where ld(p-1,p) is the linear distance between the point p-1 and the point p;

    - The simulated transversal acceleration $At_s(p)$ at the point p is taken as $At_s(p) = k(p)[Vs(p)]^2$. This formula can be amended in order to take into consideration the gravity according to the banking of the road a component of the corresponding to the banking of the road.

    - The simulated longitudinal acceleration $Al_s(p)$ at the point p is taken as $Als(p) = \left| \dfrac{Vs(p) - Vs(p-1)}{T} \right|$.

    This formula can be amended in order to take into consideration the gravity according to the gradient of the road at the point p.

    - An available longitudinal acceleration Aa is computed using the simulation relation thus $Aa = Almax \times \sqrt{1 - \left( \dfrac{Ats(p)}{Atmax} \right)^2}$ ;

    - The simulated longitudinal acceleration $Al_s(p)$ is compared to the available longitudinal acceleration Aa:

        o If $Al_s(p) \leq Aa$ then the vehicle will able to accelerate without any danger so there is no need to modify the value of Vs(p) then the process skips to the next point p+1 of process

        o If $Al_s(p) > Aa$ then the vehicle will not be able to accelerate in safe conditions the value of Vs(p) must be reduced, and for example the value of Vs(p) is reduced for a correcting constant C being for example in the range of $\dfrac{Vs(p)-Vs(p-1)}{2}$ to $\dfrac{Vs(p)-Vs(p-1)}{100}$. The new value of the maximal safety speed Vs(p) at the point p Vs(p) = Vs(p) - C will used for conducting again the above process starting from D as long as Vs(p) does not allow the vehicle to respect the safety relation. Once the computed Vs(p) allows the vehicle to respect the safety relation the process skip to the next point p+1.

The process is conducted so on until the present point Pp is reached. The maximal safe speeds determined for each point of the portion ahead during the forward sequence are recorded.

It should be remarked that according to the notation use on the figure 1, the point referenced as p-1 is situated, following the traveling direction $F_1$, before the point referenced as p whereas the point referenced as p+1 is situated after the point p according also to the traveling direction as shown by the arrow $F_1$. Thus, during the backward sequence, the computation is done iteratively going from point p+1 to point p then to point p-1, whereas during the forward sequence the computation is done iteratively going from point p-1 through point p and then to point p+1.

Once this computation is done, the present speed Vp of the vehicle is compared to this maximal safety speed at the present point as previously determined and the estimated speed Ve(Pa) is compared to the maximal safe speed at the point ahead Pa.

If the present speed Vp of the vehicle V and the estimated speed Ve(Pa) is below the maximal safe speeds respectively Vs(Pp) and Vs(Pa), no action is taken. On the contrary, if one of the present speed and the estimated speed is above its corresponding maximal safe speed then the computing means 6 emit an order for an action. This action can be done directly by the apparatus 1 according to the invention or can be an order sent to the vehicle electronic control unit 11, for example, for emitting a warning signal such as a visible signal by lamp 12 and/or an alarm sound or message emitted by a speaker 13. The order emitted by the computing means 6 can also be an order for activating a slowing apparatus 14 or procedure of the vehicle V.

Once the computation is done for the present point, the computing means 6 will conduct the same calculation, simulation and control for the new position present point of the vehicle which will be the origin of the new ahead portion.

As such computation is made continuously or at least repetitively as the vehicle V travels along the road R, the apparatus and the method according to the invention manage to reduce if not cancel any risk of rollover or over-speed of the vehicle.

In the previous description the monitoring is done for both the present speed and the estimated speed of the vehicle but according to the invention the monitoring can be conducted only for the estimated speed of the vehicle. Also, the estimated speed calculated according to the invention can be used in other processes, and/or could be compared to a maximal safe speed value obtained through another calculation than the one described above or obtained directly from a data contained in a digital map.

While the invention has been shown and described with reference to certain embodiments thereof, it would be understood by those skilled in the art that changes in form and details may be made therein without departing from the spirit and scope of the invention as defined in the appended claims

**Claims**

1.   Method for preventing vehicle rollover or over-speed for a vehicle (V) traveling on a road (R) by, at least:

> - determining a present position (Pp), a present speed (Vp) and a present longitudinal acceleration (Alp) of the vehicle as it travels on the road;
> - calculating an estimated speed (Ve) of vehicle for at least one ahead point (Pa) on the road ahead of the present position assuming that the derivative of the acceleration (jerk) has a null mean and follows a normal distribution law and using a standard deviation ($\sigma$) of the derivative of the acceleration;
> - comparing the estimated speed (Ve) with a maximum safe speed (Vs(Pa)) for the vehicle at the ahead point (Pa) and executing an action if the estimated speed (Ve(Pa)) exceed the maximal safe speed (Vs(Pa)) for this ahead position.

2.   Method for preventing vehicle rollover or over-speed according to claim 1, wherein the estimated speed is calculated according to the formula

$$\mathrm{Ve(Pa)} = \mathrm{Vp} + \mathrm{Alp} \times \Delta t - \frac{1}{2} \times \mathrm{C} \times \sigma \times (\Delta t)^2$$

where :

- $\Delta t$ is an estimated duration of the travel from the present point (Pp) to the point ahead (Pa);
- $\mathrm{C} \times \sigma$ is a considered value of the derivative of the acceleration, C being a coefficient of confidence chosen in the range of 0,5 to 2.

3. Method for preventing vehicle rollover or over-speed according to claim 1 or 2, further comprising :

- determining of the derivative of the acceleration of the vehicle;
- determining of the standard deviation ($\sigma$) of the derivative of the acceleration of the vehicle for a covered portion of road or for a last period of travel;
- recording the standard deviation ($\sigma$).

4. Method for preventing vehicle rollover or over-speed according to any of claims 1 to 3, wherein the estimated speed is dynamically calculated for consecutive present positions of the vehicle as it moves on the road.

5. Method for preventing vehicle rollover or over-speed according to any of claim 1 to 4 further comprising:

- calculating a maximal safe speed for a present position (Pp) as the vehicle travels on the road according to:

- road geometry data comprising at least the curvature of the road (R) for a plurality of points ahead of the present position ($P_p$);
- a safety relation which the traveling vehicle (V) must respect at any moment or any point of the road, said safety relation being based on a comparison of the combined longitudinal and transversal acceleration of the vehicle at a point of the road with a maximal combined longitudinal and transversal acceleration admissible for the vehicle,
- eventually executing an action if the present speed (Vp) at the present position (Pp) exceeds the maximal safe speed calculated for the present position.

6. Method for preventing vehicle rollover or over-speed according to claim 5, wherein said safety relation comprises the following relation:

$$\left(\frac{At}{At\,max}\right)^2 + \left(\frac{Al}{Al\,max}\right)^2 \leq 1$$

where :

- At is a transversal acceleration of the vehicle at a point of the road;
- Al is a longitudinal acceleration of the vehicle at a point of the road;
- Atmax is a maximal transversal acceleration admissible for the vehicle to travel with no risk of rollover or over-speed;
- Almax is a maximal longitudinal acceleration admissible for the vehicle to travel with no risk of rollover or over-speed.

7. Method for preventing vehicle rollover or over-speed, according to any of claims 5 to 6, wherein the calculation of the maximal safe speed for the present position comprises a simulation of the transversal (At) and longitudinal (Al) accelerations for a plurality of points of an ahead portion (A) of road (R) delimited by the present point (Pp) and a distal point (Pd) and including the ahead point (Pa), the maximal safe speed for the present position (Pp) being the maximal safe speed for which the simulated accelerations respect the safety relation at each point of the ahead portion (A) of the road (R), the maximal safe speed for the ahead point (Pa) being calculated during the simulation.

**8.** Method for preventing vehicle rollover or over-speed according to claim 7, wherein the simulation involves comparing a simulated longitudinal acceleration with an available longitudinal acceleration based on a simulated transversal acceleration and based on the safety relation.

**9.** Method for preventing vehicle rollover or over-speed according to claim 7 or 8 wherein the simulation uses at least :

- an estimation relation $At_s = k(Vs)^2$ where :
- $At_s$ is a simulated transversal acceleration of the vehicle at the same point of the ahead portion;
- K is the curvature of the road at the same point of the ahead portion;
- Vs is a maximal safe speed at a point of the ahead portion;

- a simulation relation $\left(\dfrac{At_s}{At\max}\right)^2 + \left(\dfrac{Al_s}{Al\max}\right)^2 = 1$ where:

- $At_s$ is a simulated transversal acceleration of the vehicle at a point of the ahead portion; and
- $Al_s$ is a simulated longitudinal acceleration of the vehicle at the same a point of the ahead portion;
- and the safety relation.

**10.** Method for preventing vehicle rollover or over-speed according to any of claims 7 or 9, where in the simulation comprises a backward sequence during which the simulated accelerations are calculated iteratively for each consecutive point of the ahead portion (A) starting from the distal point (Pd) and going backward to the present point (Pp).

**11.** Method for preventing vehicle rollover or over-speed according to any of claims 7 to 10, wherein, the simulation comprises a forward sequence during which the simulated accelerations are calculated iteratively for each consecutive point of the ahead portion (A) starting from the present point (Pp) and going forward to the distal point (Pd).

**12.** Method for preventing vehicle rollover or over-speed according to claims 10 and 11, wherein the simulation comprises, first, the backward sequence and, second, the forward sequence conducted using maximal safe speeds for each point of the portion ahead calculated during the backward sequence.

**13.** Method for preventing vehicle rollover or over-speed according to any of claims 7 to 12, wherein the maximal safe speed is dynamically calculated for consecutive present positions of the vehicle (V) as it moves on the road (R).

**14.** Apparatus for preventing a vehicle rollover or over-speed comprising :

- means for dynamically determining a present position of the vehicle traveling on a road;
- means for dynamically determining a present speed of the vehicle traveling on the road;
- means for dynamically determining a present longitudinal acceleration of the vehicle
- memory means storing at least a standard deviation ($\sigma$) of the derivative of the acceleration;
- computing means programmed to implement the method according to any of claims 1 to 4 and to emit a signal and/or an action order according to the result of the implementation of the method.

**15.** Apparatus for preventing a vehicle rollover or over-speed according to claim 14, wherein the memory means (4) store:

- geometric data (5) of the road;
- a maximal transversal acceleration (Atmax) admissible for the vehicle to travel with no risk of rollover or over-speed;
- a maximal longitudinal acceleration (Almax) admissible for the vehicle to travel with no risk of rollover or over-speed;
- computing means (6) are programmed to implement the method according to any of claims 1 to 13 and to emit a signal and/or an action order according to the result of the implementation of the method.

**Patentansprüche**

**1.** Verfahren zur Verhinderung eines Fahrzeugüberschlags oder einer Geschwindigkeitsüberschreitung eines Fahrzeugs (V), das auf einer Straße (R) fährt, durch wenigstens

- Bestimmung einer momentanen Position (Pp), einer momentanen Geschwindigkeit (Vp) und einer momentanen Längsbeschleunigung (Alp) des Fahrzeugs, wenn es auf der Straße fährt,
- Berechnung einer geschätzten Geschwindigkeit (Ve) des Fahrzeugs für wenigstens eine Vorausstelle (Pa) auf der Straße, die sich vor der momentanen Position befindet, wobei angenommen wird, dass die Ableitung der Beschleunigung (jerk) einen Nullmittelwert hat und einem Normalverteilungsgesetz folgt, und eine Standardabweichung (σ) der Ableitung der Beschleunigung verwendet wird,
- Vergleichen der geschätzten Geschwindigkeit (Ve) mit einer maximalen Sicherheitsgeschwindigkeit (Vs(Pa)) für das Fahrzeug an der Vorausstelle (Pa) und Ausführung einer Aktion, wenn die geschätzte Geschwindigkeit (Ve(Pa)) die maximale Sicherheitsgeschwindigkeit (Vs(Pa)) für diese Vorausposition überschreitet.

**2.** Verfahren zur Verhinderung eines Fahrzeugüberschlags oder einer Geschwindigkeitsüberschreitung nach Anspruch 1, bei dem die geschätzte Geschwindigkeit entsprechend der Formel

$$Ve(Pa) = Vp + Alp \times \Delta t - \frac{1}{2} \times C \times \sigma \times (\Delta t)^2$$

berechnet wird, wobei:

- $\Delta t$ eine geschätzte Fahrdauer von der momentanen Stelle (Pp) zu der Vorausstelle (Pa) ist,
- $C \times \sigma$ ein berücksichtigter Wert der Ableitung der Beschleunigung ist, wobei C ein Konfidenzkoeffizient ist, der in dem Bereich von 0,5 bis 2 gewählt wird.

**3.** Verfahren zur Verhinderung eines Fahrzeugüberschlags oder einer Geschwindigkeitsüberschreitung nach Anspruch 1 oder 2, das außerdem umfasst:

- die Bestimmung der Ableitung der Beschleunigung des Fahrzeugs,
- die Bestimmung der Standardabweichung (σ) der Ableitung der Beschleunigung des Fahrzeugs für einen abgedeckten Straßenabschnitt oder für einen letzten Fahrtzeitabschnitt,
- Aufzeichnen der Standardabweichung (σ).

**4.** Verfahren zur Verhinderung eines Fahrzeugüberschlags oder einer Geschwindigkeitsüberschreitung nach einem der Ansprüche 1 bis 3, bei dem die geschätzte Geschwindigkeit dynamisch für aufeinanderfolgende Momentanpositionen des Fahrzeugs berechnet wird, wenn es auf der Straße fährt.

**5.** Verfahren zur Verhinderung eines Fahrzeugüberschlags oder einer Geschwindigkeitsüberschreitung nach einem der Ansprüche 1 bis 4, das außerdem umfasst

- die Berechnung einer maximalen Sicherheitsgeschwindigkeit für eine momentane Position ($P_p$), wenn das Fahrzeug auf der Straße fährt entsprechend

- Straßengeometriedaten, die wenigstens den Kurvenverlauf der Straße (R) für eine Vielzahl von Stellen vor der momentanen Position ($P_p$) umfassen,
- einer Sicherheitsrelation, die das fahrende Fahrzeug (V) zu jedem Moment oder an jeder Stelle der Straße respektieren muss, wobei die Sicherheitsrelation auf einem Vergleich der kombinierten Längs- und Querbeschleunigung des Fahrzeugs an einer Stelle der Straße mit einer maximalen kombinierten Längs- und Querbeschleunigung basiert, die für das Fahrzeug zulässig ist,
- schließlich die Ausführung einer Aktion, wenn die momentane Geschwindigkeit (Vp) an der momentanen Position (Pp) die maximale Sicherheitsgeschwindigkeit überschreitet, die für die momentane Position berechnet wurde.

**6.** Verfahren zur Verhinderung eines Fahrzeugüberschlags oder einer Geschwindigkeitsüberschreitung nach Anspruch 5, wobei die Sicherheitsrelation die folgende Relation umfasst:

$$\left(\frac{At}{At\max}\right)^2 + \left(\frac{Al}{Al\max}\right)^2 \leq 1$$

wobei

- At eine Querbeschleunigung des Fahrzeugs an einer Stelle der Straße ist;
- Al eine Längsbeschleunigung des Fahrzeugs an einer Stelle der Straße ist,
- Atmax eine maximale Querbeschleunigung ist, die für das Fahrzeug zulässig ist, damit es ohne Risiko eines Überschlags oder einer Geschwindigkeitsüberschreitung fahren kann,
- Almax eine maximale Längsbeschleunigung ist, die zulässig ist, damit das Fahrzeug ohne Risiko eines Überschlags oder einer Geschwindigkeitsüberschreitung fahren kann.

7. Verfahren zur Verhinderung eines Fahrzeugüberschlags oder einer Geschwindigkeitsüberschreitung nach einem der Ansprüche 5 bis 6, bei dem die Berechnung der maximalen Sicherheitsgeschwindigkeit für die momentane Position eine Simulation der Querbeschleunigung (At) und der Längsbeschleunigung (Al) für eine Vielzahl von Stellen eines Vorausabschnittes (A) der Straße (R) umfasst, der durch die momentane Stelle (Pp) und eine entfernte Stelle (Pd) begrenzt wird und die Vorausstelle (Pa) enthält, wobei die maximale Sicherheitsgeschwindigkeit für die momentane Position (Pp) die maximale Sicherheitsgeschwindigkeit ist, für die die simulierten Beschleunigungen die Sicherheitsrelation bei jeder Stelle des Vorausabschnitts (A) der Straße (R) respektieren, wobei die maximale Sicherheitsgeschwindigkeit für die Vorausstelle (Pa) während der Simulation berechnet wird.

8. Verfahren zur Verhinderung eines Fahrzeugüberschlags oder einer Geschwindigkeitsüberschreitung nach Anspruch 7, bei dem die Simulation den Vergleich einer simulierten Längsbeschleunigung mit einer erhältlichen Längsbeschleunigung auf der Basis einer simulierten Querbeschleunigung und auf der Basis der Sicherheitsrelation beinhaltet.

9. Verfahren zur Verhinderung eines Fahrzeugüberschlags oder einer Geschwindigkeitsüberschreitung nach Anspruch 7 oder 8, bei dem die Simulation wenigstens verwendet:

   - eine Schätzrelation $At_s = k\,(Vs)^2$, wobei

       - $At_s$ eine simulierte Querbeschleunigung des Fahrzeugs an der gleichen Stelle des Vorausabschnitts ist,
       - k die Krümmung der Straße an der gleichen Stelle des Vorausabschnitts ist,
       - Vs eine maximale Sicherheitsgeschwindigkeit an einer Stelle des Vorausabschnitts ist,

   - eine Simulationsrelation $\left(\dfrac{At_s}{At\max}\right)^2 + \left(\dfrac{Al_s}{Al\max}\right)^2 = 1$, wobei

       - $At_s$ eine simulierte Querbeschleunigung des Fahrzeugs an einer Stelle des Vorausabschnitts ist, und
       - Als eine simulierte Längsbeschleunigung des Fahrzeugs an der gleichen Stelle des Vorausabschnitts ist,

   - und die Sicherheitsrelation.

10. Verfahren zur Verhinderung eines Fahrzeugüberschlags oder einer Geschwindigkeitsüberschreitung nach einem der Ansprüche 7 oder 9, wobei die Simulation eine Rückwärtssequenz umfasst, während der die simulierten Beschleunigungen iterativ für jede aufeinanderfolgende Stelle des Vorausabschnitts (A) beginnend von der entfernten Stelle (Pd) und rückwärts gehend bis zu der momentanen Stelle (Pp) berechnet werden.

11. Verfahren zur Verhinderung eines Fahrzeugüberschlags oder einer Geschwindigkeitsüberschreitung nach einem der Ansprüche 7 bis 10, wobei die Simulation eine Vorwärtssequenz umfasst, während der die simulierten Beschleunigungen iterativ für jede aufeinanderfolgende Stelle des Vorausabschnitts (A) beginnend von der momentanen Stelle (Pp) und vorwärts gehend bis zu der entfernten Stelle (Pd) berechnet werden.

12. Verfahren zur Verhinderung eines Fahrzeugüberschlags oder einer Geschwindigkeitsüberschreitung nach den Ansprüchen 10 und 11, wobei die Simulation erstens die Rückwärtssequenz und zweitens die Vorwärtssequenz umfasst, die unter Verwendung maximaler Sicherheitsgeschwindigkeiten für jede Stelle des Vorausabschnitts durchgeführt werden, die während der Rückwärtssequenz berechnet wurden.

13. Verfahren zur Verhinderung eines Fahrzeugüberschlags oder einer Geschwindigkeitsüberschreitung nach einem der Ansprüche 7 bis 12, wobei die maximale Sicherheitsgeschwindigkeit für aufeinanderfolgende momentane Positionen des Fahrzeugs (V) dynamisch berechnet werden, wenn es auf der Straße (R) fährt.

**14.** Vorrichtung zur Verhinderung eines Fahrzeugüberschlags oder einer Geschwindigkeitsüberschreitung mit

- Einrichtungen für eine dynamische Bestimmung einer momentanen Position des auf einer Straße fahrenden Fahrzeugs,
- Einrichtungen für eine dynamische Bestimmung einer momentanen Geschwindigkeit des auf der Straße fahrenden Fahrzeugs,
- Einrichtungen für eine dynamische Bestimmung einer momentanen Längsbeschleunigung des Fahrzeugs,
- Speichereinrichtungen, die wenigstens eine Standardabweichung (σ) der Ableitung der Beschleunigung speichern,
- Recheneinrichtungen, die so programmiert sind, dass sie das Verfahren nach einem der Ansprüche 1 bis 4 implementieren und ein Signal und/oder einen Aktionsbefehl dem Ergebnis der Implementierung des Verfahrens entsprechend ausgeben.

**15.** Vorrichtung zur Verhinderung eines Fahrzeugüberschlags oder einer Geschwindigkeitsüberschreitung nach Anspruch 14, wobei die Speichereinrichtung (4) speichert:

- die geometrischen Daten (5) der Straße,
- eine maximale Querbeschleunigung (Atmax), die zulässig ist, damit das Fahrzeug ohne Risiko eines Überschlags oder einer Geschwindigkeitsüberschreitung fährt,
- eine maximale Längsbeschleunigung (Almax), die zulässig ist, damit das Fahrzeug ohne Risiko eines Überschlags oder einer Geschwindigkeitsüberschreitung fährt,
- wobei die Recheneinrichtungen (6) so programmiert sind, dass sie das Verfahren nach einem der Ansprüche 1 bis 13 implementieren und ein Signal und/oder einen Aktionsbefehl gemäß dem Ergebnis der Implementierung des Verfahrens ausgeben.

**Revendications**

**1.** Système pour empêcher un retournement ou un excès de vitesse d'un véhicule (V) roulant sur une route (R), comprenant au moins les étapes consistant à :

- établir une position présente (Pp), une vitesse présente (Vp) et une accélération longitudinale présente (Alp) du véhicule alors qu'il roule sur la route ;
- calculer une vitesse estimée (Ve) du véhicule pour au moins un point en avant (Pa) sur la route en avant de la position présente en supposant que la dérivée de l'accélération (suraccélération) possède une moyenne nulle et suit une loi normale et en utilisant un écart-type (σ) de la dérivée de l'accélération ;
- comparer la vitesse estimée (Ve) à une vitesse de sécurité maximale (Vs(Pa)) pour le véhicule au point en avant (Pa), et exécuter une action si la vitesse estimée (Ve(Pa)) dépasse la vitesse de sécurité maximale (Vs(Pa)) pour cette position en avant.

**2.** Procédé pour empêcher un retournement ou un excès de vitesse d'un véhicule selon la revendication 1, la vitesse estimée étant calculée au moyen de la formule :

$$\mathrm{Ve(Pa)} = \mathrm{Vp} + \mathrm{Alp} \times \Delta t - \frac{1}{2} \times \mathrm{C} \times \sigma \times (\Delta t)^2$$

où :

- $\Delta t$ est une durée estimée du trajet du point présent (Pp) au point en avant (Pa) ;
- $C \times \sigma$ est une valeur considérée de la dérivée de l'accélération, C étant un coefficient de confiance choisi dans l'intervalle compris entre 0,5 et 2.

**3.** Procédé pour empêcher un retournement ou un excès de vitesse d'un véhicule selon la revendication 1 ou 2, comprenant en outre les étapes consistant à :

- établir la dérivée de l'accélération du véhicule ;
- établir l'écart-type (σ) de la dérivée de l'accélération du véhicule pour un tronçon de route parcouru ou pour une dernière période de trajet ;
- enregistrer l'écart-type (σ).

4. Procédé pour empêcher un retournement ou un excès de vitesse d'un véhicule selon l'une quelconque des revendications 1 à 3, la vitesse estimée étant calculée dynamiquement pour des positions présentes consécutives du véhicule alors qu'il roule sur la route.

5. Procédé pour empêcher un retournement ou un excès de vitesse d'un véhicule selon l'une quelconque des revendications 1 à 4, comprenant en outre les étapes consistant à :

 - calculer une vitesse de sécurité maximale pour une position présente (Pp) alors que le véhicule roule sur la route en fonction :
 - de données géométriques de la route comprenant au moins la courbure de la route (R) pour une pluralité de points en avant de la position présente (Pp) ;
 - une relation de sécurité que le véhicule (V) roulant sur la route doit respecter à tout instant ou en tout point de la route, ladite relation de sécurité étant basée sur une comparaison de l'accélération longitudinale et transversale combinée du véhicule en un point de la route à une accélération longitudinale et transversale combinée maximale admissible pour le véhicule,
 - éventuellement exécuter une action si la vitesse présente (Vp) à la position présente ($P_p$) dépasse la vitesse de sécurité maximale calculée pour la position présente.

6. Procédé pour empêcher un retournement ou un excès de vitesse d'un véhicule selon la revendication 5, ladite relation de sécurité comprenant la relation suivante :

$$\left(\frac{At}{At\ max}\right)^2 + \left(\frac{Al}{Al\ max}\right)^2 \leq 1$$

où :

 - At est une accélération transversale du véhicule en un point de la route ;
 - Al est une accélération longitudinale du véhicule en un point de la route ;
 - Atmax est une accélération transversale maximale admissible pour que le véhicule roule sans risque de retournement ou d'excès de vitesse ;
 - Almax est une accélération longitudinale maximale admissible pour que le véhicule roule sans risque de retournement ou d'excès de vitesse.

7. Procédé pour empêcher un retournement ou un excès de vitesse d'un véhicule selon la revendication 5 ou 6, le calcul de la vitesse de sécurité maximale pour la position présente comprenant une simulation d'accélérations transversale (At) et longitudinale (Al) pour une pluralité de points d'un tronçon en avant (A) de la route (R) délimité par le point présent (Pp) et un point distal (Pd) et comprenant le point en avant (Pa), la vitesse de sécurité maximale pour la position présente (Pp) étant la vitesse de sécurité maximale pour laquelle les accélérations simulées respectent la relation de sécurité en chaque point du tronçon en avant (A) de la route (R), la vitesse de sécurité maximale pour le point en avant (Pa) étant calculée durant la simulation.

8. Procédé pour empêcher un retournement ou un excès de vitesse d'un véhicule selon la revendication 7, la simulation comprenant la comparaison d'une accélération longitudinale simulée à une accélération longitudinale disponible basée sur une accélération transversale simulée et sur la relation de sécurité.

9. Procédé pour empêcher un retournement ou un excès de vitesse d'un véhicule selon la revendication 7 ou 8, la simulation utilisant au moins :

 - une relation d'estimation $At_s = k(Vs)^2$ où :
 - $At_s$ est une accélération transversale simulée du véhicule au même point du tronçon en avant ;
 - K est la courbure de la route au même point du tronçon en avant ;
 - Vs est une vitesse de sécurité maximale en un point du tronçon en avant ;
 - une relation de simulation

17

$$\left(\frac{At_s}{At\,max}\right)^2 + \left(\frac{Al_s}{Al\,max}\right)^2 = 1$$

où :
- $At_s$ est une accélération transversale simulée du véhicule en un point du tronçon en avant ; et
- $Al_s$ est une accélération longitudinale simulée du véhicule au même point du tronçon en avant ;
- et la relation de sécurité.

10. Procédé pour empêcher un retournement ou un excès de vitesse d'un véhicule selon la revendication 7 ou 9, la simulation comprenant une séquence rétrograde durant laquelle les accélérations simulées sont calculées par itération pour chaque point consécutif du tronçon en avant (A) en partant du point distal (Pd) et en revenant au point présent (Pp).

11. Procédé pour empêcher un retournement ou un excès de vitesse d'un véhicule selon l'une quelconque des revendications 7 à 10, la simulation comprenant une séquence antérograde durant laquelle les accélérations simulées sont calculées par itération pour chaque point consécutif du tronçon en avant (A) en partant du point présent (Pp) et en progressant jusqu'au point distant (Pd).

12. Procédé pour empêcher un retournement ou un excès de vitesse d'un véhicule selon les revendications 10 et 11, la simulation comprenant, en premier lieu, la séquence rétrograde et, en second lieu, la séquence antérograde exécutées en utilisant des vitesses de sécurité maximales pour chaque point du tronçon en avant calculées durant la séquence rétrograde.

13. Procédé pour empêcher un retournement ou un excès de vitesse d'un véhicule selon l'une quelconque des revendications 7 à 12, la vitesse de sécurité maximale étant calculée dynamiquement pour des positions présentes consécutives du véhicule (V) alors qu'il roule sur la route (R).

14. Appareil pour empêcher un retournement ou un excès de vitesse d'un véhicule, comprenant :

- des moyens pour établir dynamiquement une position présente du véhicule roulant sur une route ;
- des moyens pour établir dynamiquement une vitesse présente du véhicule roulant sur la route ;
- des moyens pour établir dynamiquement une accélération longitudinale présente du véhicule ;
- des moyens mémoire pour enregistrer au moins un écart-type ($\sigma$) de la dérivée de l'accélération ;
- des moyens de calcul programmés pour mettre en oeuvre le procédé selon l'une quelconque des revendications 1 à 4 et pour émettre un signal et/ou un ordre d'action en fonction du résultat de la mise en oeuvre du procédé.

15. Appareil pour empêcher un retournement ou un excès de vitesse d'un véhicule selon la revendication 14, les moyens mémoire (4) enregistrant :

- des données géométriques (5) de la route ;
- une accélération transversale maximale (Atmax) admissible pour que le véhicule roule sans risque de retournement ou d'excès de vitesse ;
- une accélération longitudinale maximale (Almax) est admissible pour que le véhicule roule sans risque de retournement ou d'excès de vitesse ;
- les moyens de calcul (6) étant programmés pour mettre en oeuvre le procédé selon l'une quelconque des revendications 1 à 13 et pour émettre un signal et/ou un ordre d'action en fonction du résultat de la mise en oeuvre du procédé.

Fig.1

Fig.2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007008090 A